Europäisches Patentamt

European Patent Office

Office européen des brevets

(19)

(11) **EP 1 293 488 A1**

(12) **EUROPEAN PATENT APPLICATION**

(43) Date of publication:
**19.03.2003 Bulletin 2003/12**

(21) Application number: **02020456.6**

(22) Date of filing: **11.09.2002**

(51) Int Cl.⁷: **C03C 1/00**, C03C 17/34,
C04B 41/85, C04B 41/89,
C04B 41/52, C03C 17/25,
C09D 1/00

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **12.09.2001 JP 2001276022**

(71) Applicant: **Toyo Gosei Kogyo Co., Ltd.
Ichikawa-shi, Chiba 272-0012 (JP)**

(72) Inventors:
• **Niume, Kazuma, Toyo Gosei Kogyo Co., Ltd.
Ichikawa-shi, Chiba 272-0012 (JP)**
• **Utida, Takasi,
Photosensitive Mat. Research Lab.
Inba-mura, Inba-gun, Chiba 270-1609 (JP)**

(74) Representative: **Strehl Schübel-Hopf & Partner
Maximilianstrasse 54
80538 München (DE)**

(54) **Coating solution and method for forming transparent coating film**

(57)    The invention provides a coating solution for forming transparent silica coating film which solution is stable and can readily form comparatively thick silica coating film on a substrate through single application of the coating solution without use of an organic solvent. The invention also provides a method for producing transparent silica coating film. The coating solution comprising an aqueous solution contains at least one silicon compound which is selected from the group consisting of silicon oxide, silicic acid, and a silicic acid hydrate and which has been modified whereby having silanol groups; a strong organic base; and a water-soluble polymer, wherein the silicon compound is dissolved in the aqueous solution in presence of the strong organic base.

**Description**

BACKGROUND OF THE INVENTION

Field of the Invention

The present invention relates to a coating solution for forming transparent silica coating film on an object or a substrate such as a glass substrate or a ceramic substrate, and to a method for producing transparent silica coating film. More particularly, the invention relates to a coating solution useful for forming planarization film or protective film on a variety of objects such as semiconductor elements and liquid crystal displays and to a method for producing the coating film.

Background Art

Conventionally, among coating solutions for forming silica-based coating film, there have been known coating solutions which are produced by dissolving in an organic solvent a siloxane polymer obtained through hydrolysis and polycondensation of an alkoxysilane.

When the above procedure is employed, hydrolysis and polycondensation of formed hydroxyl groups (silanol groups) are difficult to control. In addition, it is difficult to maintain the viscosity of the coating solution at predetermined value.

The difficulties inhibit production of silica-based coating film of consistently uniform thickness. Other problems arise as well, such as use of comparatively expensive alkoxysilane as a starting material, and use of an organic solvent.

SUMMARY OF THE INVENTION

In order to solve the aforementioned problems, the present inventors have carried out extensive studies on a coating solution for forming transparent silica coating film and a production method for the coating film. Thus, an object of the present invention is to provide a coating solution for forming transparent silica film, which coating solution is stable and can readily form comparatively thick transparent silica coating film on a substrate through single application of the coating solution without use of an organic solvent. Another object of the invention is to provide a method for producing transparent silica coating film.

Accordingly, in a first aspect of the present invention, there is provided a coating solution for forming transparent silica coating film comprising an aqueous solution containing at least one silicon compound which is selected from the group consisting of silicon oxide, silicic acid, and a silicic acid hydrate and which has been modified whereby having silanol groups; a strong organic base; and a water-soluble polymer, wherein the silicon compound is dissolved in the aqueous solution in presence of the strong organic base.

The strong organic base may be at least one species selected from the group consisting of tetramethylammonium hydroxide (TMAH) and tetraethylammonium hydroxide (TEAH).

The strong organic base may be at least one species selected from the group consisting of triethylamine, dibutylamine, and trimethylamine, and the coating solution contains an organic solvent which brings the strong organic base to become compatible with water.

The silicon compound may be obtained through hydrolysis of silicon tetrachloride.

The silicon compound may be obtained by allowing silicon oxide particulates to stand in air at ambient temperature.

The silicon compound may be obtained by dispersing silicic acid or silicic acid n-hydrate ($SiO_2 \cdot nH_2O$) in water, and heating the resultant dispersion.

The water-soluble polymer may be at least one species selected from the group consisting of poly(vinyl alcohol) (PVA), polyvinylacetamide (PNVA), polyvinylformamide (PNVF), polydimethylacrylamide (PDMAA), polyacrylamide (PAAM), polyacryloylmorpholine (PAM), hydroxyethyl cellulose (HEC), hydroxypropyl cellulose (HPC), and carboxymethyl cellulose (CMC).

In a second aspect of the present invention, there is provided a method for producing transparent silica coating film comprising applying onto a substrate to be treated a coating solution for forming transparent silica coating film, to thereby form coating film, and firing the coating film, to thereby form transparent silica coating film, wherein the coating solution comprises an aqueous solution containing at least one silicon compound which is selected from the group consisting of silicon oxide, silicic acid, and a silicic acid hydrate and which has been modified whereby having silanol groups; a strong organic base; and a water-soluble polymer, the silicon compound being dissolved in the aqueous solution in presence of the strong organic base.

The strong organic base may be at least one species selected from the group consisting of tetramethylammonium hydroxide (TMAH) and tetraethylammonium hydroxide (TEAH).

The strong organic base may be at least one species selected from the group consisting of triethylamine, dibutylamine, and trimethylamine, and the coating solution contains an organic solvent which brings the strong organic base to become compatible with water.

The silicon compound employed in the method may be obtained through hydrolysis of silicon tetrachloride and may be dissolved in the aqueous solution of a strong organic base, to thereby yield the coating solution for forming transparent silica coating film.

The silicon compound employed in the method may be obtained by allowing silicon oxide particulates to stand in air at ambient temperature and may be dissolved in the aqueous solution of a strong organic base, to thereby yield the coating solution for forming transparent silica coating film.

The silicon compound employed in the method may be obtained by dispersing silicic acid or silicic acid n-hydrate ($SiO_2 \cdot nH_2O$) in water and heating the resultant dispersion and may be dissolved in the aqueous solution of a strong organic base, to thereby yield the coating solution for forming transparent silica coating film.

The water-soluble polymer may be at least one species selected from the group consisting of poly(vinyl alcohol) (PVA), polyvinylacetamide (PNVA), polyvinylformamide (PNVF), polydimethylacrylamide (PDMAA), polyacrylamide (PAAM), polyacryloylmorpholine (PAM), hydroxyethyl cellulose (HEC), hydroxypropyl cellulose (HPC), and carboxymethyl cellulose (CMC).

Transparent silica coating film having a thickness of at least 100 nm may be formed through single application of the coating solution.

The transparent silica coating film produced according to the present invention is quite inexpensive and has excellent transparency and film quality. The coating film can be readily produced through a customary coating method, thereby reducing production costs. Thus, the coating film can be employed for a variety of purposes.

## DETAILED DESCRIPTION OF PREFERRED EMBODIMENTS

The coating solution of the present invention for forming transparent silica coating film comprises an aqueous solution containing at least one silicon compound which is selected from the group consisting of silicon oxide, silicic acid, and a silicic acid hydrate and which has been modified whereby having silanol groups; a strong organic base; and a water-soluble polymer, wherein the silicon compound is dissolved in the aqueous solution in presence of the strong organic base.

The silicon compound employed in the present invention is selected from the group consisting of silicon oxide, silicic acid, and a silicic acid hydrate, and has been modified whereby having silanol groups. As used herein, the term "silanol-group-modified silicon compound" refers to silicon oxide, silicic acid, or a silicic acid hydrate having a structure in which at least a portion of network-like linked silicon atoms is connected with at least one silanol group, the silanol group being formed by placing silicon oxide, silicic acid, or a silicic acid hydrate in predetermined reaction conditions. Through incorporation of silanol groups into a silicon compound in a great amount, the silicon compound can be dissolved, to sufficiently high concentration, in an aqueous solution of a strong organic base.

Preferably, at least one species selected from the group consisting of tetramethylammonium hydroxide (TMAH) and tetraethylammonium hydroxide (TEAH) is used as the strong organic base. In addition, other strong organic base compounds of similar basicity may also be used.

Alternatively, at least one species selected from the group consisting of triethylamine, dibutylamine, and trimethylamine may also be employed as the strong organic base. However, since these base compounds have poor solubility in water, an organic solvent; e.g., acetone, which brings these strong organic base compounds to become compatible with water is preferably incorporated.

Silica is known to be dissolved in water to a silica content as low as 0.015% at room temperature and a pH of 7 (R. Iler, Kolloid-Chemie des Siliciumdioxids und der Silikate, Cornell University Press, Ithaca, New York (1955)). Formation of coating film from such a low-silica-content solution has never been reported. USP 4576921 discloses that a silicon compound is peptized through addition of a strong base, to thereby yield a dispersion of silicon oxide. However, formation of coating film by use of the thus-formed silica dispersion as a coating solution has never been reported.

According to the present invention, a coating solution for forming transparent silica coating film is produced by dissolving a silanol-group-modified silicon compound to a high concentration through addition of an aqueous solution of a strong organic base. Although the precise mechanism of the enhanced dissolution has not yet been elucidated, the silicon compound is considered to be dissolved through deprotonation of silanol groups by the strong organic base, leading to formation of anions of the silicon compound. Among silicon species, silica of the particulate form has remarkably large surface area. Therefore, the number of the thus-formed silanol groups per unit weight is considered to be greatly increased. The silica particulates having a large number of silanol groups are dissolved in an aqueous solution of a strong organic base to a silica content as high as 5 wt.% or more, thereby yielding the coating solution of the present invention for forming transparent silica coating film.

Meanwhile, the bond angle of Si-O-Si in siloxane bonds varies between 120°C and 180°C. Among such siloxane bonds, distorted siloxane bonds exhibit high reactivity to water. In accordance with the following scheme,

$$\equiv Si\text{-}O\text{-}Si \equiv \; + \; H\text{-}O\text{-}H \rightarrow 2 \equiv Si\text{-}OH$$

a siloxane bond reacts with water, to thereby form silanol groups. In some report, the Si-OH density is reported to reach 2.5 $SiOH/nm^2$.

According to the present invention, a coating solution for forming transparent silica coating film is produced by dissolving such a silanol-group-modified silicon compound to a high concentration through addition of an aqueous solution of a strong organic base.

As mentioned above, the coating solution according to the present invention for forming transparent silica coating film is produced by dissolving a silanol-group-modified silicon compound in an aqueous solution of a strong organic base such as tetramethylammonium hydroxide (TMAH), and no particular limitation is imposed on the dissolution method and other procedures so long as the silicon compound is dissolved in the aqueous base solution. For example, a silicon compound may be micro-pulverized, and the resultant micropowder(particulates) may be added to an aqueous solution of tetramethylammonium hydroxide (TMAH), followed by stirring and allowing the mixture to stand, thereby dissolving the silicon compound. Alternatively, water is added to a silicon compound, and the resultant mixture is heated to thereby form a sol-like substance, followed by addition of an aqueous solution of tetramethylammonium hydroxide (TMAH) to the sol-like substance. In the above two processes, dissolution may be performed under heating in accordance with needs. When the process via a sol-like substance is employed, formation of the sol-like substance and dissolution by use of a strong base may be performed at single step.

The silanol-group-modified silicon compound may be obtained through hydrolysis of silicon tetrachloride.

As mentioned above, when silicon oxide particulates are allowed to stand in air at ambient temperature, silanol groups are formed, in high density, on the surfaces of the particulates. As a result, such silicon oxide particulates can be dissolved to a high concentration in a solution of a strong organic base such as TMAH.

When silanol-group-modified silicic acid or a silanol-group-modified silicic acid hydrate is employed, the compound is preferably transformed into a sol-like compound, followed by dissolution in a solution of a strong organic base such as TMAH. When TMAH is present, a sol-like silicic acid hydrate is dissolved in accordance with remarkably interesting steps. Specifically, the dissolution rate is very low until several days after addition of an organic alkali such as TMAH, and the rate gradually increases thereafter. Finally, the hydrate is completely dissolved on day 7 after addition of the organic alkali, to thereby form a transparent solution of remarkably high stability.

In addition to these components, a water-soluble polymer is added so as to increase viscosity of a coating solution for forming transparent silica coating film and to enhance adhesion between a substrate and the formed coating film. As used herein, the water-soluble polymer is a polymer which has a polar group and can be dissolved in water.

Through addition of such a water-soluble polymer having a polar group, crack-free thick coating film can be formed.

Examples of water-soluble polymers employed in the present invention and having a polar group include poly(vinyl alcohol) (PVA), polyvinylacetamide (PNVA), polyvinylformamide (PNVF), polydimethylacrylamide (PDMAA), polyacrylamide (PAAM), polyacryloylmorpholine (PAM), hydroxyethyl cellulose (HEC), hydroxypropyl cellulose (HPC), and carboxymethyl cellulose (CMC).

Although any suitable water-soluble polymer having a polar group can be selected appropriately from the above-listed compounds, the polymer preferably has as high stability to alkali as possible. In other words, water-soluble polymers which are decomposed or modified by alkali are not preferred, from the standpoint of stability of the coating solution containing the polymers.

For example, use of PVA (in the present invention, PVA also refers to saponified products of poly(vinyl acetate) and saponified products of modified poly(vinyl acetate)) occurs a problem. Specifically, when a typically used PVA of having a saponification degree of 86 is used, acetic acid released from the PVA neutralizes organic base, to thereby lower pH and precipitate silicon compound.

In the above case, the precipitation can be prevented by adding an organic base. However, completely saponified PVA is preferably used, since the coating solution prepared from completely saponified PVA exhibits high stability and is stable under long-term storage.

The amount of the water-soluble polymer having a polar group, which amount varies depending on the type of the polymer, is typically about 0.1 wt.% to about 5 wt.%. The water-soluble polymer may be added until application of the coating solution. For example, the polymer may be added before, after, or simultaneously with dissolution of a silicon compound in an aqueous solution of a strong organic base.

The water-soluble polymer having a polar group which is added to the coating solution of the present invention for forming transparent silica coating film serves as a film-forming aid. Thus, the formed silica coating film has a thickness suitable for practical use and high toughness. In addition, by modifying the amount of the water-soluble polymer added to the coating solution, control of the thickness of the coating film, which has been difficult when conventional application methods are employed, can be performed, as desired. The coating solution can form, through single application thereof, thick silica coating film having a thickness of at least 100 nm.

The thus-produced coating solution of the present invention for forming transparent silica coating film can serve as a coating solution without being subjected to additional treatments. Since the coating solution contains a silicon compound in an amount of at least 5 wt.% and a silanol-group-modified silicon compound is conceivably present in the form of oligomer, transparent silica coating film of sufficient thickness can be formed.

When transparent silica coating film is formed by use of the coating solution of the present invention for forming transparent silica coating film, the coating solution is applied on a substrate through a routine application method such as dip coating, spin coating, spraying, screen printing, roll coating, or brush coating, followed by firing at 400 to 800°C, preferably 450 to 700°C. Particularly when applied to a large-scale substrate, the coating solution is preferably applied through low-speed spin coating, thereby forming uniform coating film on a large-scale substrate having a dimension greater than 15 inches. By firing the coating film, transparent silica coating film having a uniform thickness of 100 to 500 nm can be formed.

According to the coating solution of the present invention for forming transparent silica coating film, the water-soluble polymer having a polar group serves as a film-forming aid. Thus, the formed coating film has a thickness suitable for practical use, undergoes low shrinkage, and exhibits excellent transparency and storage stability. In addition, by modifying the amount of the water-soluble polymer added to the coating solution, the thickness of the coating film can be controlled, as desired. The coating solution can form, through single application thereof, thick coating film having a thickness of 100 to 500 nm.

When the thick gel film produced through a conventional sol-gel method is fired, cracks are generated in the fired film. Thus, the maximum film thickness is limited to 100 nm. In contrast, according to the present invention, the film thickness can be increased considerably. This finding is of great value for actual production steps. Specifically, ineffective repetition of application steps for increasing coating film thickness can be omitted, thereby simplifying production and lowering production costs.

In the present invention, no particular limitation about configurations and materials is imposed on the substrate to which the coating solution of the present invention for forming transparent silica coating film is applied. Examples of substrates that can be coated by the coating solution include semiconductor substrates, glass substrates, ceramic substrates, silica-coated glass plates, borosilicate glass plates, and quartz glass plates.

Since the water-soluble polymer having a polar group serves as a film-forming aid, the transparent silica coating film produced from the coating solution of the present invention for forming transparent silica coating film has excellent toughness and transparency and exhibits strong adhesion to a substrate. The coating film is of high quality; i.e., is free from pinholes and microcracks.

According to the present invention, comparatively thick silica coating film can be readily formed on a substrate through single application of a coating solution for forming silica coating film. In addition, the thus-formed silica coating film exhibits low shrinkage and is free from cracks. The transparent silica coating film is particularly suitable for forming planarization film or protective film for semiconductor elements, liquid crystal displays, etc.

In many cases, conventional silica coating solutions are prepared through hydrolysis of alkoxysilane to form a prepolymer, and dissolution of the prepolymer in an organic solvent. Thus, sol viscosity changes with the elapse of time, which is problematic in practical use. In contrast, the coating solution of the present invention for forming transparent silica coating film has advantages; i.e., the coating solution is a completely water-soluble coating solution and does not require use of an organic solvent, and sol viscosity remains unchanged with the elapse of time. Thus, the coating solution can be used without limitation and can form transparent silica coating film with safety in production steps.

EXAMPLES

The present invention will next be described in detail by way of Examples and Comparative Example, which should not be construed as limiting the invention thereto.

Example 1

Silica particulates (particle size: 5-50 nm) (1.0 g) were added to a 10 wt.% aqueous solution (5 mL) of tetramethylammonium hydroxide, and the mixture was gently stirred by means of a magnetic stirrer. In the course of stirring, silica particulates were gradually dissolved. Through stirring for about two hours, silica particulates were completely dissolved, to thereby form a colorless transparent solution.

To the thus-formed solution, distilled water (5 mL) was added, and the resultant mixture was stirred, followed by addition of a 10 wt.% aqueous solution (1 mL) of PVA and sufficient stirring, to thereby yield a slightly viscous transparent solution. The solution was employed as a coating solution of Example 1.

The coating solution was applied to a soda-lime glass plate through dip-coating, dried, and fired at 500°C for one hour, to thereby form transparent silica coating film having a thickness of 370 nm.

On the thus-formed transparent silica coat glass substrate, transparent conductive tin oxide film was formed, whereby alkali-barrier performance of the silica coating film was evaluated. The transparent conductive tin oxide film was formed by applying a coating solution for forming transparent conductive tin oxide film on the silica-coat glass substrate through dip-coating and firing the coating at 550°C. The tin oxide film was. found to have a sheet resistivity of 600 $\Omega \cdot$cm, which is equivalent to that of tin oxide film formed on a commercial silica-coat substrate. The result indicates that no adverse effect due to dissolution of alkali from the glass substrate was identified.

Example 2

Silicic acid n-hydrate (7.0 g) was added to distilled water (50 mL), and the resultant mixture was stirred at 95°C for five hours, to thereby yield a sol-like substance. To the sol-like substance, a 15 wt.% aqueous solution (10 mL) of tetramethylammonium hydroxide was added, and the mixture was stirred for 30 minutes. The thus-stirred mixture was allowed to stand at ambient temperature. No dissolution was observed until about three days from the start of stirring, but dissolution rate gradually increased after day 5, and the sol-like substance was completely dissolved on day 7, to thereby form a transparent solution. To the thus-formed solution, a 10 wt.% aqueous solution (5 mL) of PVA was added, and the resultant mixture was sufficiently stirred, to thereby yield a viscous transparent solution. The solution was employed as a coating solution of Example 2.

The coating solution was applied to a soda-lime glass plate through dip-coating, dried, and fired at 500°C for one hour, to thereby form transparent silica coating film having a thickness of 350 nm.

In a manner similar to that employed in Example 1, transparent conductive tin oxide film was formed on the thus-formed transparent silica coat glass substrate. The tin oxide film was found to have a sheet resistivity of 590 $\Omega \cdot$cm, indicating that no adverse effect due to dissolution of alkali from the glass substrate was identified.

### Example 3

Tetrachlorosilane (7.0 g) was slowly added to distilled water (200 mL) with stirring by means of a magnetic stirrer so as to effect hydrolysis. The reaction was exothermic, and a white chloride is vigorously generated. The resultant reaction mixture was cooled to ambient temperature, and 1N aqueous ammonia was slowly added to the cooled mixture under cooling until the pH of the mixture reached 7.0, to thereby yield a sol-like substance. The thus-precipitated sol-like substance was separated through filtration and washed three times by distilled water.

To the thus-obtained precipitates, a 15 wt.% aqueous solution (10 mL) of tetramethylammonium hydroxide was added, and the resultant mixture was allowed to stand at ambient temperature. The sol-like substance was gradually dissolved, and fives days were required to form a complete solution.

To the thus-formed transparent solution, PVA (1.0 wt.%) was added, and the resultant mixture was sufficiently stirred, to thereby yield a coating solution.

The coating solution was applied to a soda-lime glass plate through dip-coating, dried, and fired at 500°C for 30 minutes, to thereby form transparent silica coating film having a thickness of 320 nm.

In a manner similar to that employed in Example 1, transparent conductive tin oxide film was formed on the thus-formed transparent silica coat glass substrate. The tin oxide film was found to have a sheet resistivity of 570 $\Omega \cdot$cm, indicating that no adverse effect due to dissolution of alkali from the glass substrate was identified.

### Example 4

Silica particulates (particle size: 5-50 nm) (2.0 g) were added to a 20 wt.% aqueous solution (10 mL) of tetraethylammonium hydroxide, and the mixture was gently stirred by means of a magnetic stirrer. In the course of stirring, silica particulates were gradually dissolved. Through stirring for about 30 hours, silica particulates were completely dissolved, to thereby form a colorless transparent solution.

To the thus-formed solution, distilled water (10 mL) was added, and the resultant mixture was stirred, followed by addition of a 10 wt.% aqueous solution (1.7 mL) of PVA and sufficient stirring, to thereby yield a slightly viscous transparent solution. The solution was employed as a coating solution of Example 4.

The coating solution was applied to a soda-lime glass plate through dip-coating, dried, and fired at 500°C for one hour, to thereby form transparent silica coating film having a thickness of 290 nm.

In a manner similar to that employed in Example 1, transparent conductive tin oxide film was formed on the thus-formed transparent silica coat glass substrate. The tin oxide film was found to have a sheet resistivity of 670 $\Omega \cdot$cm, indicating that no adverse effect due to dissolution of alkali from the glass substrate was identified.

### Example 5

Silica particulates (particle size: 5-50 nm) (2.0 g) were added to a mixture of a 99 wt.% trimethylamine (3.0 mL) and acetone (1.0 mL), and the resultant mixture was gently stirred by means of a magnetic stirrer. In the course of stirring, silica particulates were gradually dissolved. Through stirring for about one hour, silica particulates were completely dissolved, to thereby form a colorless transparent solution.

To the thus-formed solution, distilled water (5 mL) was added, and the resultant mixture was stirred, followed by addition of a 10 wt.% aqueous solution (1 mL) of PVA and sufficient stirring, to thereby yield a slightly viscous transparent solution. The solution was employed as a coating solution of Example 5.

The coating solution was applied to a soda-lime glass plate through dip-coating, dried, and fired at 500°C for 1 hour, to thereby form transparent silica coating film.

In a manner similar to that employed in Example 1, transparent conductive tin oxide film was formed on the thus-formed transparent silica coat glass substrate. The tin oxide film was found to have a sheet resistivity of 730 $\Omega \cdot$cm, indicating that no adverse effect due to dissolution of alkali from the glass substrate was identified.

Comparative Example

Silica particulates (particle size: 5-50 nm) (1.0 g) were added to a 10 wt.% aqueous solution (5 mL) of trimethylamine, and the resultant mixture was gently stirred by means of a magnetic stirrer. In the course of stirring, a portion of the silica particulates was dissolved, but remaining silica particulate's were no longer dissolved even when the mixture had been allowed to stand for five days.

The liquid phase of the mixture was separated through filtration, and PVA was added thereto in a manner similar to that employed in Example 1, to thereby form a coating solution.

In a manner similar to that employed in Example 1, the coating solution was applied to a soda-lime glass substrate. However, transparent coating film having satisfactory toughness for practical use was not obtained.

As described hereinabove, according to the present invention, comparatively thick transparent silica coating film can be readily formed on a substrate through single application of a coating solution prepared by use of silanol-group-modified silicon oxide, silicic acid, or a silicic acid hydrate as a silica source. In addition, the thus-formed silica coating film exhibits low shrinkage and is free from cracks. Thus, the transparent silica coating film is suitably employed as planarization film or protective film for semiconductor substrates, glass substrates, ceramic substrates, etc.

The coating solution of the present invention for forming transparent silica coating film is a completely water-soluble coating liquid and can be prepared without using an organic solvent. Thus, the coating solution can be produced with safety in production steps, and transparent silica coating film for non-limitative use can be formed. In addition, the coating solution is quite inexpensive as compared with conventional coating solutions prepared from alkoxysilane.

The strong organic base used in the present invention can vary widely, and is selected to provide the desired degree of compatibility of the base with water and of dissolubility against the silanol group modified silicon compound. In general, however, an aqueous solution of the strong organic base will have a pH 11 or more.

**Claims**

1. A coating solution for forming transparent silica coating film **characterised by** comprising an aqueous solution containing at least one silicon compound selected from the group consisting of silicon oxide, silicic acid, and a silicic acid hydrate, the silicon compound having been modified whereby having silanol groups; a strong organic base; and a water-soluble polymer, wherein the silicon compound is dissolved in the aqueous solution in presence of the strong organic base.

2. The coating solution of claim 1, wherein the silicon compound is obtained through hydrolysis of silicon tetrachloride.

3. The coating solution of claim 1, wherein the silicon compound is obtained by allowing silicon oxide particulates to stand in air at ambient temperature.

4. The coating solution of claim 1, wherein the silicon compound is obtained by dispersing silicic acid or silicic acid n-hydrate ($SiO_2 \cdot nH_2O$) in water, to thereby form a dispersion, and heating the dispersion.

5. A method for producing transparent silica coating film **characterised by** comprising applying onto a substrate to be treated a coating solution for forming transparent silica coating film, to thereby form coating film, and firing the coating film, to thereby form transparent silica coating film, wherein the coating solution comprises an aqueous solution containing at least one silicon compound selected from the group consisting of silicon oxide, silicic acid, and a silicic acid hydrate, the silicon compound having been modified whereby having silanol groups; a strong organic base; and a water-soluble polymer, the silicon compound being dissolved in the aqueous solution in presence of the strong organic base.

6. The method of claim 5, wherein the silicon compound employed in the method is obtained through hydrolysis of silicon tetrachloride and is dissolved in the aqueous solution of a strong organic base, to thereby yield the coating solution for forming transparent silica coating film.

7. The method of claim 5, wherein the silicon compound employed in the method is obtained by allowing silicon oxide particulates to stand in air at ambient temperature and is dissolved in the aqueous solution of a strong organic base, to thereby yield the coating solution for forming transparent silica coating film.

8. The method of claim 5, wherein the silicon compound employed in the method is obtained by dispersing silicic acid or silicic acid n-hydrate ($SiO_2 \cdot nH_2O$) in water and heating the resultant dispersion and is dissolved in the aqueous solution of a strong organic base, to thereby yield the coating solution for forming transparent silica coating film.

9. The method of any one of claims 5 to 8, wherein transparent silica coating film having a thickness of at least 100 nm is formed through single application of the coating solution.

10. The invention of any preceding claim, wherein the strong organic base is at least one species selected from the group consisting of tetramethylammonium hydroxide (TMAH) and tetraethylammonium hydroxide (TEAH).

11. The invention of any one of claims 1 to 9, wherein the strong organic base is at least one species selected from the group consisting of triethylamine, dibutylamine, and trimethylamine, and the coating solution contains an organic solvent which brings the strong organic base to become compatible with water.

12. The invention of preceding claim, wherein the water-soluble polymer is at least one species selected from the group consisting of poly(vinyl alcohol) (PVA), polyvinylacetamide (PNVA), polyvinylformamide (PNVF), polydimethylacrylamide (PDMAA), polyacrylamide (PRAM), polyacryloylmorpholine (PAM), hydroxyethyl cellulose (HEC), hydroxypropyl cellulose (HPC), and carboxymethyl cellulose (CMC).

**European Patent Office**

## EUROPEAN SEARCH REPORT

Application Number

EP 02 02 0456

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 940 675 A (BOHLAYER JULIE A ET AL) 10 July 1990 (1990-07-10) * column 4, line 33 - column 5, line 5 * | 1-12 | C03C1/00 C03C17/34 C04B41/85 C04B41/89 C04B41/52 C03C17/25 C09D1/00 |
| P,A | EP 1 152 040 A (TOYO GOSEI KOGYO KK) 7 November 2001 (2001-11-07) * example 6 * | 1-12 | |
| A | & WO 01 36544 A (TOYO) 25 May 2001 (2001-05-25) * example 6 * | 1-12 | |
| A | PATENT ABSTRACTS OF JAPAN vol. 010, no. 369 (P-525), 10 December 1986 (1986-12-10) & JP 61 162822 A (MITSUBISHI ELECTRIC CORP), 23 July 1986 (1986-07-23) * abstract * | 1-12 | |
| A | PATENT ABSTRACTS OF JAPAN vol. 010, no. 369 (P-525), 10 December 1986 (1986-12-10) & JP 61 162823 A (MITSUBISHI ELECTRIC CORP), 23 July 1986 (1986-07-23) * abstract * | 1-12 | TECHNICAL FIELDS SEARCHED (Int.Cl.7) C03C C04B C09D |
| A | DD 262 546 A (CHEMISCH PHARMAZEUTISCHES WERK) 7 December 1988 (1988-12-07) * the whole document * | 1-12 | |

The present search report has been drawn up for all claims

| Place of search | Date of completion of the search | Examiner |
|---|---|---|
| MUNICH | 13 January 2003 | Somann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 0456

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2003

| Patent document cited in search report | | Publication date | Patent family member(s) | | Publication date |
|---|---|---|---|---|---|
| US 4940675 | A | 10-07-1990 | NONE | | |
| EP 1152040 | A | 07-11-2001 | JP | 2001210156 A | 03-08-2001 |
| | | | EP | 1152040 A1 | 07-11-2001 |
| | | | WO | 0136544 A1 | 25-05-2001 |
| JP 61162822 | A | 23-07-1986 | NONE | | |
| JP 61162823 | A | 23-07-1986 | NONE | | |
| DD 262546 | A | 07-12-1988 | DD | 262546 A3 | 07-12-1988 |

EPO FORM P0459

For more details about this annex : see Official Journal of the European Patent Office, No. 12/82